(19) Europäisches Patentamt
European Patent Office
Office européen des brevets

(11) Veröffentlichungsnummer: **0 279 774**
**B1**

# (12) EUROPÄISCHE PATENTSCHRIFT

(45) Veröffentlichungstag der Patentschrift: **03.01.90**

(51) Int. Cl.⁴: **C09B 5/28,** D06P 3/60

(21) Anmeldenummer: **88810001.3**

(22) Anmeldetag: **05.01.88**

(54) **Anthrimidcarbazolverbindung mit Thenoylaminogruppen.**

(30) Priorität: **17.02.87 CH 580/87**

(43) Veröffentlichungstag der Anmeldung:
**24.08.88 Patentblatt 88/34**

(45) Bekanntmachung des Hinweises auf die Patenterteilung:
**03.01.90 Patentblatt 90/1**

(84) Benannte Vertragsstaaten:
**CH DE FR GB IT LI**

(56) Entgegenhaltungen:
**Keine Entgegenhaltungen.**

(73) Patentinhaber: **CIBA-GEIGY AG, Klybeckstrasse 141, CH-4002 Basel(CH)**

(72) Erfinder: **Altermatt, Hans, Dr., Schönenbachstrasse 22, CH-4153 Reinach(CH)**

EP 0 279 774 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Anthrimidcarbazolverbindung mit Thenoylaminogruppen, Verfahren zu ihrer Herstellung und ihre Verwendung als Küpenfarbstoff zum Färben oder Bedrucken von Textilfasern aus natürlicher oder regenerierter Cellulose.

Die erfindungsgemässe Anthrimidcarbazolverbindung entspricht der Formel

(1)

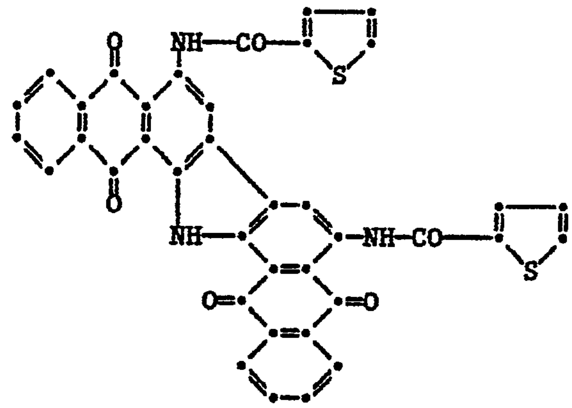

Dieser neue, olivefärbende Küpenfarbstoff unterscheidet sich vom bekannten, ähnlich färbenden Küpenfarbstoff 4,4'-Dibenzoylamino-1,1'-dianthrimidcarbazol (Vat Black 27, C.I. No. 69005) durch seine Infrarot-Reflexion. Der erfindungsgemässe Farbstoff zeigt zwischen 700 und 900 nm einen bedeutend steileren Anstieg der Reflexionskurve als der bekannte Farbstoff, was für die Infrarot-Tarnung besonders erwünscht ist. Diese Verbesserung der Infrarot-Reflexion ist überraschend.

Die Anthrimidcarbazolverbindung der Formel (1) wird durch Carbazolierung von 4,4'-Dithenoylamino-1,1'-dianthrimid der Formel

(2)

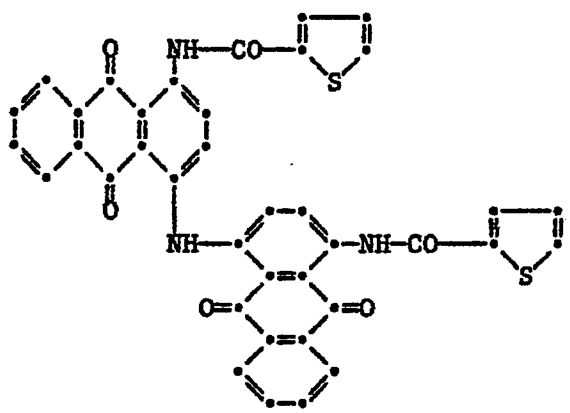

gemäss den üblichen Carbazolierungsmethoden, beispielsweise in 95 bis 105%iger Schwefelsäure oder in Chlorsulfonsäure bei 10 bis 70°C erhalten.

Die neue Carbazolverbindung kann auch durch Einführung der Thenoylaminogruppe in die 3- und 6-Stellungen des 1,2,7,8-Diphthaloylcarbazols hergestellt werden. Diese Einführung erfolgt durch Acylierung von 3,6-Diamino-1,2,7,8-diphthaloylcarbazol der Formel (3)

(3) 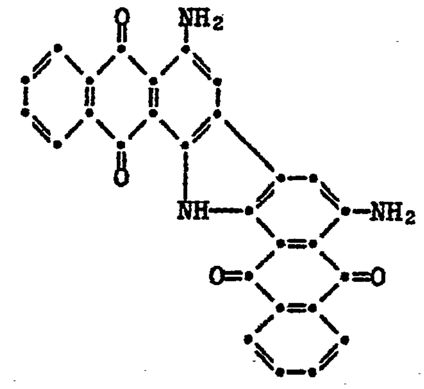

mit einem Thiophen-2-carbonsäurehalogenid, besonders das Chlorid oder durch Kondensation eines 3,6-Dihalogen-1,2,7,8-diphthaloylcarbazols der Formel (4)

(4) 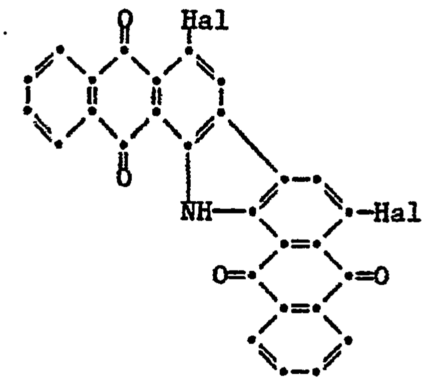

worin Hal Brom oder Chlor bedeutet,
mit Thiophen-2-carbonsäureamid.

Die Reaktionen finden vorzugsweise in einem inerten hochsiedenden organischen Lösungsmittel, beispielsweise zwischen 150 bis 230°C statt. Als Lösungsmittel eignen sich Chlorbenzole, wie Dichlorbenzol oder Trichlorbenzol, oder besonders Nitrobenzol.

Die erfindungsgemässe Anthrimidcarbazolverbindung eignet sich zum Färben oder Bedrucken der verschiedensten Materialien, insbesondere zum Färben oder Bedrucken von Fasern aus natürlicher oder regenerierter Cellulose in Gegenwart von Reduktionsmitteln, wie z.B. Dithionit. Dank der vorteilhaften Infrarot-Reflexion, seiner oliven Nuance und den guten Gebrauchsechtheiten kann der neue Farbstoff besonders zum Färben oder Bedrucken von baumwollenen Militärartikeln Verwendung finden.

In den folgenden Beispielen bedeuten die Teilen, sofern nichts anderes angegeben ist, Gewichtsteile, die Prozente Gewichtsprozente.

Beispiel 1:

8,25 g 1-Brom-4-thenoyl-(2′)-amino-anthrachinon und 7,3 g 1-Amino-4-thenoyl-(2′)-amino-anthrachinon werden in 80 ml Nitrobenzol in Gegenwart von 2,2 g Natriumcarbonat und 0,5 g Kupfer-I-chlorid 8 Stunden bei 195-200°C verrührt. Nach dem Erkalten wird das Produkt abfiltriert und mit Nitrobenzol und Ethanol gewaschen. Hierauf wird das Produkt noch mit Wasser gewaschen und mit 5%iger Salpetersäure ausgekocht. Man filtriert nochmals ab und wäscht neutral. Man erhält 11,5 g des Anthrimides der Formel

(2)

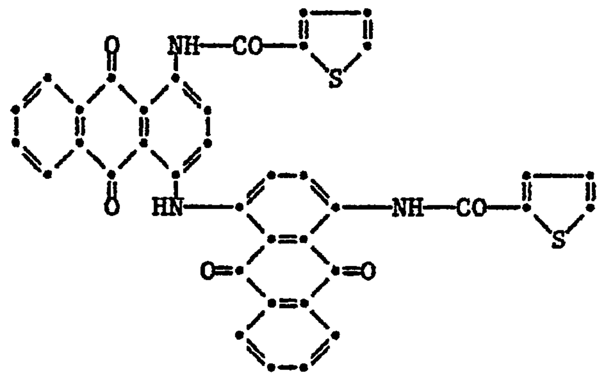

10 g des Anthrimides der Formel (2) werden bei 10-20°C in 100 g Schwefelsäure (96 %) eingetragen. Alsdann wird die Lösung 3 Stunden bei 20-25°C gerührt und auf 500 ml Eiswasser, das 1 g Natriumchlorat enthält, gegossen. Die erhaltene Suspension wird auf 70°C erwärmt. Hierauf lässt man eine Lösung von 1 g Natriumchlorat in 10 ml Wasser im Verlaufe von 20 Minuten zutropfen. Die Reaktionssuspension wird noch 2 Stunden bei 90°C gerührt, heiss abfiltriert und neutral gewaschen. Nach dem Trocknen erhält man 9,8 g des Farbstoffes der Formel

(1)

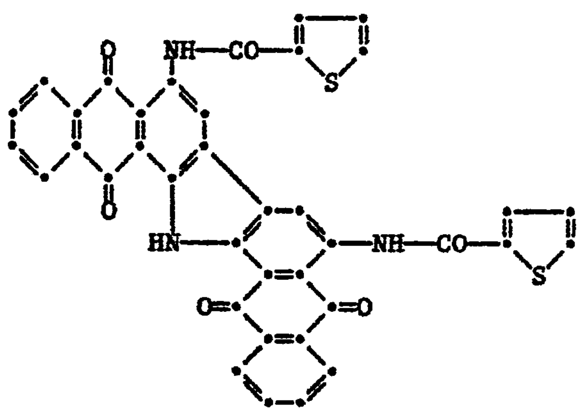

Dieser Farbstoff färbt Baumwolle aus der Küpe in echten, oliven Tönen.

Eine 1,6%ige Färbung auf Baumwollcretonne zeigt bei
700 nm31 %,
800 nm64 % und
900 nm71 % Infrarot(IR)-Reflexion.

Der Vergleichsfarbstoff CI Vat Black 27, C.I. 69005, welcher anstelle von Thenoylaminogruppen, Benzoylaminogruppen enthält, zeigt bei gleich starker Färbung bei
700 nm28 %,
800 nm40 % und
900 nm59 % IR-Reflexion.

<u>Beispiel 2:</u>

9,2 g 4,4'-Diamino-1,1'-dianthrimid werden in 75 ml Nitrobenzol auf 145-150°C erhitzt. Hierauf lässt man im Verlaufe von 30 Minuten 6,5 g Thiophen-2-carbonsäurechlorid zutropfen. Man erhöht die Temperatur der Suspension im Verlaufe von 2 Stunden auf 170-175°C und rührt 2 Stunden bei dieser Temperatur. Nach dem Erkalten wird das Produkt abfiltriert, mit Nitrobenzol und Ethanol gewaschen. Man erhält 12,5 g des Anthrimides der Formel (2). Das Anthrimid wird gemäss Beispiel 1, Absatz 2 in die Carbazolverbindung der Formel (1) übergeführt.

<u>Beispiel 3:</u>

9,2 g 3,6-Diamino-1,2,7,8-diphthaloylcarbazol der Formel (3) werden in 100 ml Nitrobenzol auf 145-150°C erhitzt. Im Verlauf von 30 Minuten lässt man 7,5 g Thiophen-2-carbonsäurechlorid zutropfen. Die Temperatur wird im Verlauf von 3 Stunden auf 185-190°C erhöht, worauf die Reaktionsmischung 5 Stunden nachgerührt wird. Nach dem Erkalten wird der Niederschlag abfiltriert, mit Nitrobenzol und Ethanol

gründlich gewaschen und getrocknet. Das erhaltene Produkt entspricht dem gemäss Beispiel 1 hergestellten Farbstoff der Formel (1).

Färbevorschrift

1,5 g des Farbstoffes der Formel (1) werden mit 15 ml einer Natriumhydroxidlösung von 36° Bé und 5 g Natriumdithionit in 200 g Wasser bei 50 bis 60°C verküpt. Einem Färbebad, das in 2000 g Wasser 5 ml der Natriumhydroxidlösung und 3,7 g Natriumdithionit enthält, gibt man die obige Stammküpe zu und geht bei 50°C mit 100 g Baumwolle ein. Nach 10 Minuten gibt man 15 g Natriumchlorid zu, nach 20 Minuten weitere 15 g und färbt bei 50°C während 45 Minuten. Hierauf wird die Baumwolle abgequetscht, oxidiert und wie üblich fertiggestellt. Man erhält eine echte olive Färbung.

**Patentansprüche**

1. Anthrimidcarbazolverbindung der Formel

(1)

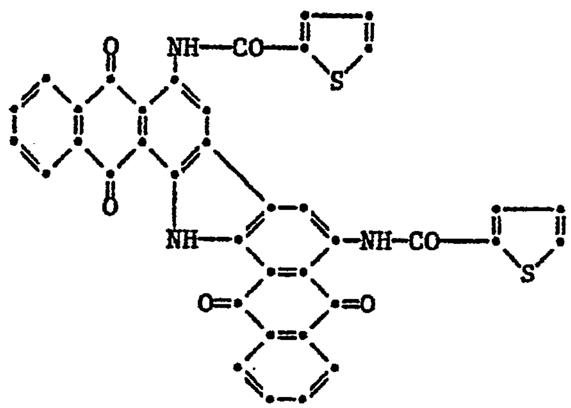

2. Verfahren zur Herstellung der Anthrimidcarbazolverbindung gemäss Anspruch 1 durch Carbazolierung der Anthrimidverbindung der Formel

(2)

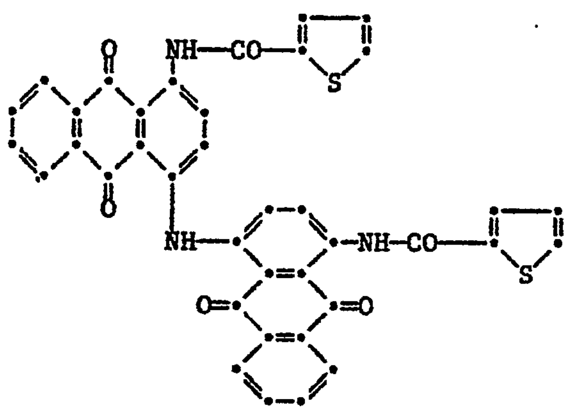

in an sich bekannter Weise.

3. Verfahren zur Herstellung der Anthrimidcarbazolverbindung gemäss Anspruch 1 durch Acylierung der Carbazolverbindung der Formel

(3)

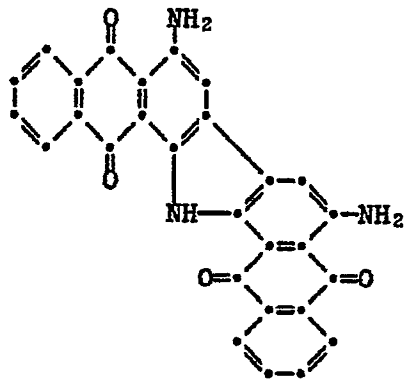

mit einem Thiophen-2-carbonsäurehalogenid.

4. Verwendung der Anthrimidcarbazolverbindung gemäss Anspruch 1 zum Färben oder Bedrucken von Textilfasern aus natürlicher oder regenerierter Cellulose.

## Claims

1. An anthrimidecarbazole compound of the formula

(1)

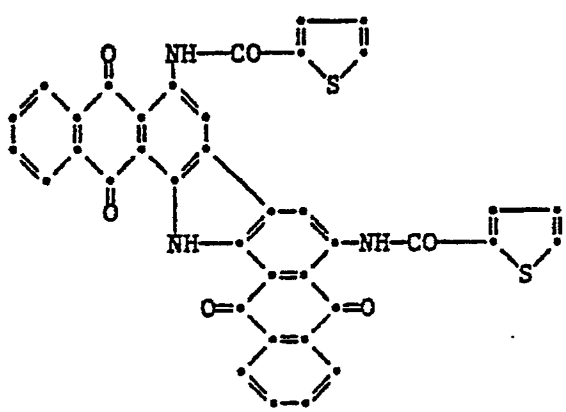

2. A process for the preparation of the anthrimidecarbazole compound according to claim 1 by converting the anthrimide compound of the formula

(2)

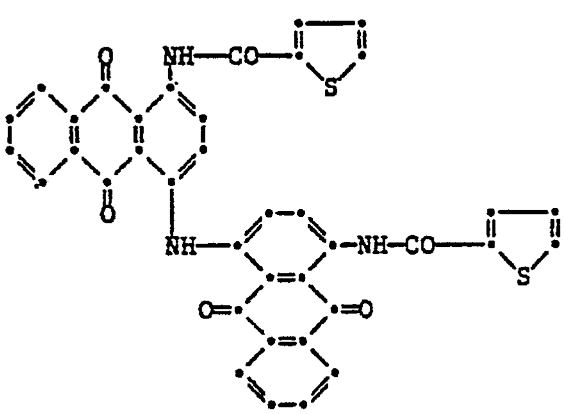

into a carbazole in a manner known per se.

3. A process for the preparation of the anthrimidecarbazole compound according to claim 1 by acylating the carbazole compound of the formula

(3)

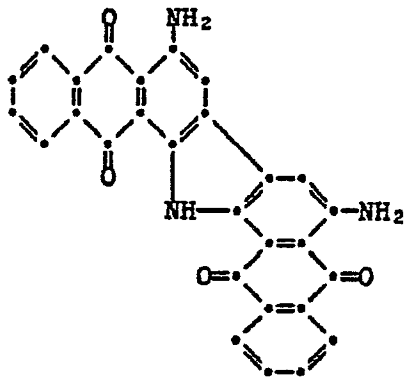

with a thiophene-2-carboxylic acid halide.

4. The use of the anthrimidecarbazole compound according to claim 1 for dyeing or printing textile fibres composed of natural or regenerated cellulose.

**Revendications**

1. Composé anthrimide-carbazole de formule

(1)

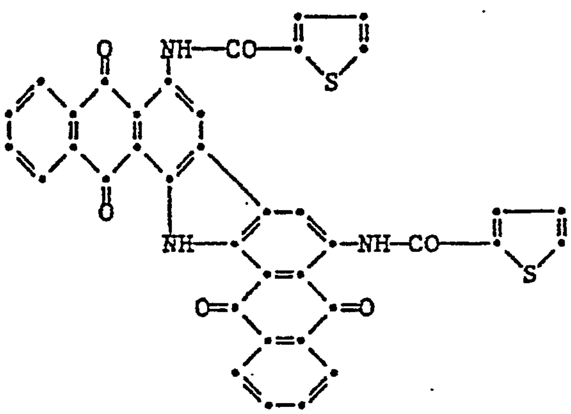

2. Procédé de préparation du composé anthrimidecarbazole conforme à la revendication 1, par carbazolation du composé anthrimide de formule

(2)

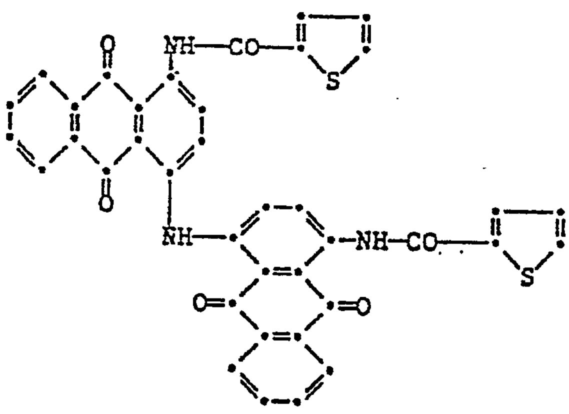

de façon connue en soi.

3. Procédé de préparation du composé anthrimide-carbazole conforme à la revendication 1, par acylation du composé carbazole de formule

(3)

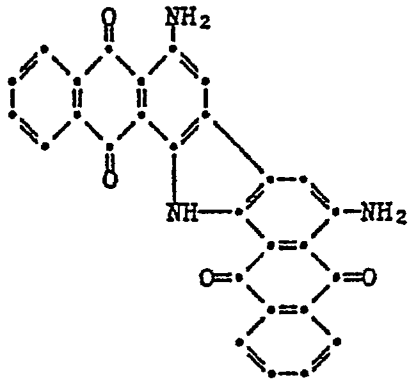

avec un halogénure d'acide thiophène-2-carboxylique.

4. Utilisation du composé anthrimide-carbazole conforme à la revendication 1 pour la teinture ou l'impression de fibres textiles en cellulose naturelle ou régénérée.